# EUROPEAN PATENT APPLICATION

(11) **EP 3 203 749 A1**
(43) Date of publication of application: **09.08.2017**
(21) Application number: 16781990.3
(22) Date of filing: 05.09.2016
(51) Int. Cl.: H04N 21/258

(54) **METHOD FOR SWITCHING VIDEO PLAYING TERMINAL, AND TERMINAL DEVICE**

(30) Priority: 11.12.2015 CN 201510931757
(71) Applicant: LE Holdings (Beijing) Co., Ltd., Beijing 100025 (CN); Le Shi Zhi Xin Electronic Technology (Tianjin) Limited, Tianjin 300450 (CN)
(72) Inventor: YANG, Liwei, Tianjin 300467 (CN)
(74) Representative: Valea AB
(86) International application number: PCT/CN2016/098108
(87) International publication number: WO 2017/096983

(57) **Abstract**

The present disclosure provides a method for switching between video playing terminals and a terminal device. The method includes: receiving, by a second terminal of a user, a video playing instruction sent by the user, the video playing instruction being configured to switch playing of a video that is currently paused by a first terminal of the user to the second terminal; determining, by the second terminal, a video source of the video according to an optimal video processing attribute of an online player of the second terminal that is stored under the user's account, and acquiring a point in time of the pause playing, which is stored under the user's account, of the video that is currently paused by the first terminal; and acquiring, by the second terminal, the video from the video source of the video and continuing to play the video from the point in time of the pause playing. With the method for switching between video playing terminals of the present disclosure, the user does not need to select the video source manually, and meanwhile the user can directly play the video from the point in time of the pause playing, that is stored under the user's account, of the video that is currently paused by the first terminal. In this way, the method not only saves time but also provides the user with great convenience in video watching.

## Description

The present disclosure claims priority to Chinese Patent Application No. 201510931757.7, filed with the Chinese Patent Office on December 11, 2015, titled "METHOD FOR SWITCHING BETWEEN VIDEO PLAYING TERMINALS AND TERMINAL DEVICE," the entire contents of which are incorporated herein by reference.

### TECHNICAL FIELD

The present disclosure relates to the field of information technology, and particularly, to a method for switching between video playing terminals and a terminal device.

### BACKGROUND

The development of the science and technology, especially the development of the Internet technology, has made people's life more convenient and diversified. People's dependency on the network leads to the emergence of an intelligentized life style and the concept of intelligentized household arises therefrom. People start to browse news, view pictures, watch and download audios and videos via the internet by using various electronic terminals, e.g., mobile phones, computers, intelligent TVs, Pads or the like. Playing online video contents is one of the fundamental functions of the electronic terminals. Specifically, users play video files stored into a remote server in real time via the network by using software on the electronic terminal such as a media player or a browser.

Currently, in order to play online videos, the user needs to autonomously select resources corresponding to the video to be played, e.g., 360P/720P/1080P, and the network speed of the current device. Under such a playing mode, the user can watch the corresponding video, but sometimes, the user needs to autonomously select some parameters that he/she may not understand. In this case, the video file that the user wants to watch cannot be played by the current terminal with a high performance. Moreover, when a relatively long video is played on a terminal, the playing of the video may be interrupted at any time. If the user wants to continue to watch the video on another terminal or under another network environment, then the user needs to reset related parameters and retrieve the position at which the playing of the video file is paused on the previous terminal, and this process is time and labor consuming.

### SUMMARY

The present disclosure provides a method for switching between video playing terminals and a terminal device, which overcome the following problems: in cases where the playing of a video on a terminal by the user is interrupted due to some reasons such as a low battery power of the terminal device and the user needs to continue to watch the video on another terminal, the user needs to reset related parameters and retrieve the position at which the playing of the video file is paused on the previous terminal, which is time and labor consuming and brings the user with inconvenient and poor terminal using experiences.

An embodiment of the present disclosure provides a method for switching between video playing terminals, which includes:
receiving, by a second terminal of a user, a video playing instruction sent by the user, the video playing instruction being configured to switch playing of a video that is currently paused by a first terminal of the user to the second terminal;
determining, by the second terminal, a video source of the video according to an optimal video processing attribute of an online player of the second terminal that is stored under the user's account, and acquiring a point in time of the pause playing, which is stored under the user's account, of the video that is currently paused by the first terminal; and
acquiring, by the second terminal, the video from the video source of the video and continuing to play the video from the point in time of the pause playing.

Preferably, in the aforesaid method, determining, by the second terminal, a video source of the video according to an optimal video processing attribute of an online player of the second terminal that is stored under the user's account includes:
searching, by the second terminal, for video sources of the video from an online video library; and
determining, by the second terminal, a video source that matches the optimal video processing attribute of the online player of the second terminal from among the video sources, which are found through the searching, of the video according to the optimal video processing attribute of the online player of the second terminal stored under the user's account.

Preferably, in the aforesaid method, the optimal video processing attribute of the online player of the second terminal includes at least one of the following attributes:
a type of a network to which the second terminal is connected, a transmission speed of the network to which the second terminal is connected, a device type of the second terminal, a resolution of the online player, and an audio processing capability of the second terminal.

Preferably, the aforesaid method further includes the following steps before the step of receiving, by a second terminal of a user, a video playing instruction sent by the user:
receiving, by the online player of the second terminal, information of the account and password that are input by the user in an account & password input interface; and
logging, by the online player of the second terminal, on the account of the user.

Another embodiment of the present disclosure further provides a terminal device, and the terminal device includes:
an instruction receiving module, being configured to receive a video playing instruction sent by the user, the video playing instruction being configured to switch playing of a video that is currently paused by a first terminal of the user to the terminal device;
a video determining module, being configured to determine a video source of the video according to an optimal video processing attribute of an online player of the terminal device that is stored under the user's account, and acquire a point in time of the pause playing, which is stored under the user's account, of the video that is currently paused by the first terminal; and
a video playing module, being configured to acquire the video from the video source of the video and continue to play the video from the point in time of the pause playing.

Preferably, in the aforesaid terminal device, the video determining module is specifically configured to:
search for video sources of the video from an online video library; and
determine a video source that matches the optimal video processing attribute of the online player of the terminal device from among the video sources, which are found through the searching, of the video according to the optimal video processing attribute of the online player of the terminal device that is stored under the user's account.

Preferably, in the aforesaid terminal device, the optimal video processing attribute of the online player of the terminal device includes at least one of the following attributes:
a type of a network to which the terminal device is connected, a transmission speed of the network to which the terminal device is connected, a device type of the terminal device, a resolution of the online player, and an audio processing capability of the terminal device.

Preferably, in the aforesaid terminal device, the instruction receiving module is further configured to:
receive information of the account and password that are input by the user in an account & password input interface; and
log on the account of the user.

An embodiment of the present disclosure further provides an electronic device, and the electronic device includes:
at least one processor; and
a memory communicatively connected with the at least one processor;
wherein the memory stores instructions that can be executed by the at least one processor, the instructions being executed by the at least one processor so that the at least one processor is operative to:
   receive a video playing instruction sent by a user, the video playing instruction being configured to switch playing of a video that is currently paused by a first terminal of the user to the electronic device;
   determine a video source of the video according to an optimal video processing attribute of an online player of the electronic device that is stored under the user's account, and acquire a point in time of the pause playing, which is stored under the user's account, of the video that is currently paused by the first terminal; and
   acquire the video from the video source of the video and continue to play the video from the point in time of the pause playing.

An embodiment of the present disclosure further provides a non-volatile computer storage medium storing computer executable instructions that, when being executed by an electronic device, enable the electronic device to:
receive a video playing instruction sent by a user, the video playing instruction being configured to switch playing of a video that is currently paused by a first terminal of the user to the electronic device;
determine a video source of the video according to an optimal video processing attribute of an online player of the electronic device that is stored under the user's account, and acquire a point in time of the pause playing, which is stored under the user's account, of the video that is currently paused by the first terminal; and
acquire the video from the video source of the video and continue to play the video from the point in time of the pause playing.

An embodiment of the present disclosure further provides a computer program product, the computer program product includes a computer program stored in a non-transitory computer readable storage medium, and the computer program includes program instructions that, when being executed by an electronic device, enable the electronic device to execute the method for switching between video playing terminals described in the aforesaid embodiments.

An embodiment of the present disclosure provides a method for switching between video playing terminals and a terminal device, and the method includes: receiving, by a second terminal, a video playing instruction sent by the user, the video playing instruction being configured to switch playing of a video that is currently paused by a first terminal of the user to the second terminal; and determining, by the second terminal, a video source of the video according to an optimal video processing attribute of an online player of the second terminal that is stored under the user's account, and acquiring a point in time of the pause playing, which is stored under the user's account, of the video that is currently paused by the first terminal. Therefore, the second terminal can directly determine the video source of the video according to the optimal video processing attribute of the online player of the second terminal that is stored under the user's account. In this way, the user does not need to select the video source manually, thereby avoiding wrongly selecting the video file and affecting the watching experience of the video due to unawareness of some parameters. Meanwhile, the playing of the video that the user has not yet finished watching can be continued directly from the point in time of the pause playing, which is stored under the user's account, of the video that is paused by the first terminal, so the user does not need to manually retrieve the position at which the playing of the video file is paused by the first terminal, thereby saving time and providing the user with great convenience in video watching.

### BRIEF DESCRIPTION OF THE DRAWINGS

One or more embodiments are exemplarily described with reference to pictures in corresponding attached drawings, and these exemplary descriptions are not intended to limit the embodiments. In the attached drawings, elements bearing the same reference numerals represent the same or similar elements, and unless otherwise stated, the pictures in the attached drawings are not intended to limit the scale.
FIG. 1 is a flowchart diagram of Embodiment 1 of a method for switching between video playing terminals according to the present disclosure.
FIG. 2 is a flowchart diagram of Embodiment 2 of a method for switching between video playing terminals according to the present disclosure.
FIG. 3 is a flowchart diagram of Embodiment 3 of a method for switching between video playing terminals according to the present disclosure.
FIG. 4 is a schematic view of functional modules of Embodiment 1 of a terminal device according to the present disclosure.
FIG. 5 is a schematic structural view of hardware of Embodiment 2 of a terminal device according to the present disclosure.

### DETAILED DESCRIPTION

To make the objectives, technical solutions and advantages of embodiments of the present disclosure more apparent, the technical solutions of the embodiments of the present disclosure will be described clearly and completely with reference to the attached drawings illustrating the embodiments of the present disclosure. Obviously, the embodiments described herein are only a part of but not all of the embodiments of the present disclosure. All other embodiments that can be obtained by those of ordinary skill in the art from the embodiments of the present disclosure without making creative efforts shall fall within the scope of the present disclosure.

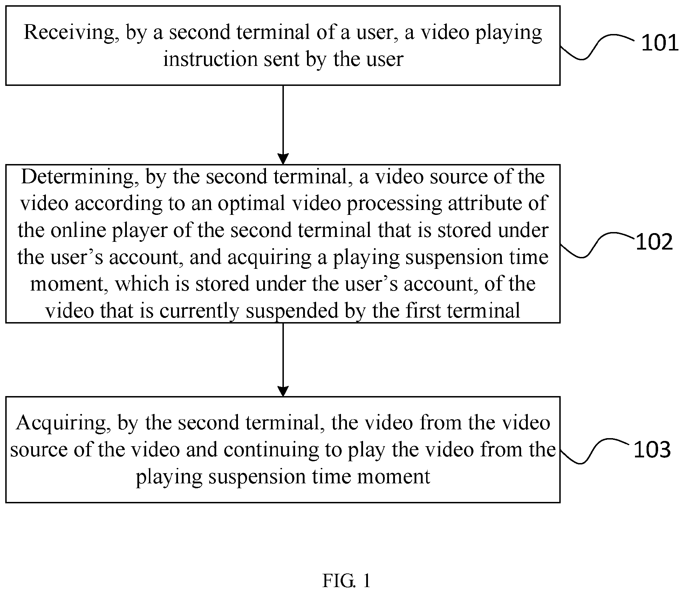

FIG. 1 is a flowchart diagram of Embodiment 1 of a method for switching between video playing terminals according to the present disclosure. As shown in FIG. 1, the method of this embodiment may include the following steps.

In Step 101: receiving, by a second terminal of a user, a video playing instruction sent by the user, the video playing instruction being configured to switch playing of a video that is currently paused by a first terminal of the user to the second terminal.

When the user plays a video such as a film or a soap opera on a first terminal thereof, e.g., a device such as a mobile phone, a computer, an intelligent TV or a Pad, the playing of the video may need to be switched to a second terminal of the user due to reasons such as a low battery power of the first terminal. At this point, the user activates an online player of the second terminal for playing the video, and sends a video playing instruction to the second terminal, and this instruction is configured to switch playing of the video that is currently paused by the first terminal of the user to the second terminal.

In Step 102: determining, by the second terminal, a video source of the video according to an optimal video processing attribute of the online player of the second terminal that is stored under the user's account, and acquiring a point in time of the pause playing, which is stored under the user's account, of the video that is currently paused by the first terminal.

After receiving the video playing instruction of the user, the second terminal determines the video source of the video according to an optimal video processing attribute of the online player of the second terminal that is stored under the user's account on which the second terminal has logged. The aforesaid online player of the second terminal may be a video player on the second terminal of the user, or a webpage player connected via the network. When the user needs to play the video content that is paused by the first terminal on the second terminal, the user first logs on the user's account, under which the optimal video processing attribute of the online player of the second terminal is stored, on the online player of the second terminal. According to this attribute, the second terminal determines the video source of the video to be played. The video sources may be of different formats, e.g., AVI, rmvb or the like, or of different sizes, e.g., 1.2 G, 635 M or the like for a same video. Meanwhile, the point in time of the pause playing, which is recorded under the user's account, of the video that is paused by the first terminal is obtained according to the user's account.

In Step 103: acquiring, by the second terminal, the video from the video source of the video and continuing to play the video from the point in time of the pause playing.

After determining the video source of the video to be played according to the optimal video processing attribute of the online player of the second terminal that is stored under the user's account, the second terminal determines a video that matches the optimal video processing attribute of the online player of the second terminal from among the video sources of the video, and continues to play the video from the point in time of the pause playing of the video according to the point in time of the pause playing of the video that is stored under the user's account.

In this embodiment, when the user wants to switch the playing of the video that is currently paused by the first terminal to the second terminal, the user sends a video playing instruction to the second terminal, the second terminal receives the video playing instruction sent by the user; the second terminal determines a video source of the video according to an optimal video processing attribute of an online player of the second terminal that is stored under the user's account, and acquires a point in time of the pause playing, which is stored under the user's account, of the video that is currently paused by the first terminal; the second terminal acquires the video from the video source of the video and continues to play the video from the point in time of the pause playing. In this way, the user does not need to select the video source manually, thereby avoiding wrongly selecting the video file and affecting the watching experience of the video due to unawareness of some parameters. Meanwhile, the playing the video that the user has not yet finished watching can be continued directly by the second terminal from the point in time of the pause playing, which is stored under the user's account, of the video that is paused by the first terminal, so the user does not need to manually retrieve the position at which the playing of the video file is paused by the first terminal, thereby saving time and providing the user with great convenience in video watching.

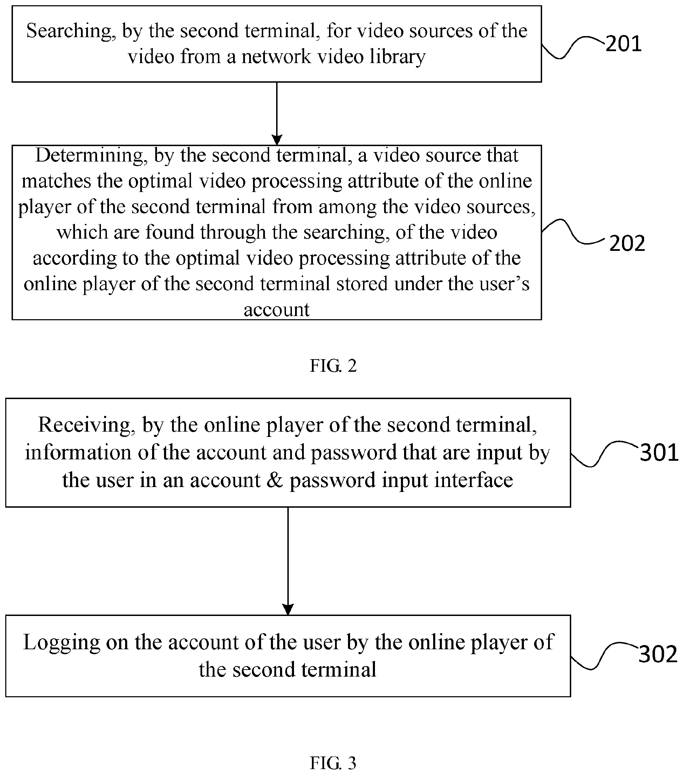

FIG. 2 is a flowchart diagram of Embodiment 2 of a method for switching between video playing terminals according to the present disclosure. The step of determining, by the second terminal, a video source of the video according to an optimal video processing attribute of an online player of the second terminal that is stored under the user's account is detailed in this embodiment. As shown in FIG. 2, this step includes the following steps.

In Step 201: searching, by the second terminal, for video sources of the video from an online video library.

After receiving the video playing instruction from the user for playing the video that is not completely played by the first terminal, the second terminal searches for the video sources of the video that the user wants to watch from the online video library. In the online video library, there are different video sources corresponding to a same video, and these video sources are different from each other mainly in terms of format, size, resolution or the like.

In Step 202: determining, by the second terminal, a video source that matches the optimal video processing attribute of the online player of the second terminal from among the video sources, which are found through the searching, of the video according to the optimal video processing attribute of the online player of the second terminal stored under the user's account.

After having found the video sources of the video from the online video library, the second terminal determines a video source that matches the optimal video processing attribute of the second terminal from among the video sources, which are found through the searching of the video according to the optimal video processing attribute of the online player of the second terminal stored under the user's account on which the second terminal has logged, e.g., the optimal video processing attribute of the online player of the second terminal is WLAN+10 M+1080×1920+Phone.

Specifically, the optimal video processing attribute of the online player of the second terminal may include at least one of the following attributes:
a type of a network to which the second terminal is connected, a transmission speed of the network to which the second terminal is connected, a device type of the second terminal, a resolution of the online player, and an audio processing capability of the second terminal. The type of the network to which the second terminal is connected may be a mobile network, a WLAN network and a wired network. The transmission speed of the network to which the second terminal is connected may be below 1 M, below 4 M, below 10 M or above 10 M or the like. The device type of the second terminal may be a mobile phone, a tablet computer, a PC, a TV or a TVBox or the like. The resolution of the online player may be 240×320, 320×480, 360×480, 480×800, 540×960, 720×1280, 1080×1920, 2k, 4k or the like. The audio processing capability of the second terminal may be DTS+Profile, Dolby+Profile, DBB sound effects or BBE sound effects or the like. The second terminal can store at least one of the aforesaid types of parameters of the video to be played under the user's account as the optimal video processing attribute of the online player of the second terminal.

In this embodiment, the second terminal searches for video sources of the video from the online video library according to the instruction of the user, and determines a video source that matches the optimal video processing attribute of the online player of the second terminal from among the video sources, which are found through the searching, of the video according to the optimal video processing attribute of the online player of the second terminal stored under the user's account. Therefore, the second terminal can automatically find the video source that matches the optimal video processing attribute of the online player of the second terminal from the online video library. In this way, the step of selecting the video source by the user is omitted, which is time and labor saving and provides the user with better video watching experiences.

Optionally, the method may further include the following steps as shown in FIG. 3 before the step of receiving, by a second terminal of a user, a video playing instruction sent by the user.

In Step 301: receiving, by the online player of the second terminal, information of the account and password that are input by the user in an account & password input interface.

If the user wants to switch the playing of the video that is paused by the first terminal to the second terminal by using the method for switching between video playing terminals of the present disclosure, then the user has to log on the account that he/she logged on when watching the video on the first terminal and input the password. The point in time of the pause playing of the video that the user wants to watch is stored under the account of the user. Only if the second terminal logs on the account of the user, can the second terminal obtain the point in time of the pause playing of the video and automatically continue to play the video that the user has not yet finished watching from the time moment.

In Step 302: logging on the account of the user by the online player of the second terminal.

After receiving the information of the account and password that are input by the user in the account & password input interface by the online player, the second terminal logs on the account of the user on the online player.

In this embodiment, the second terminal has to first receive the information of the account and password that are input by the user in the account & password input interface and log on the user's account before the online player thereof plays the video that has not yet been played completely by the first terminal, and the account inputted by the user must be the same as the account that the user logs on when playing the same video by the first terminal. In this way, the point in time of the pause playing of the video that the user has not yet finished watching can be recorded accurately and conveniently via the user's account. In case the user switches between terminal devices and wants to watch the video that he/she has not yet finished watching, the user can continue to watch the video accurately and conveniently from the point in time of the pause playing, thereby omitting the step of retrieving the point in time of the pause playing by the user.

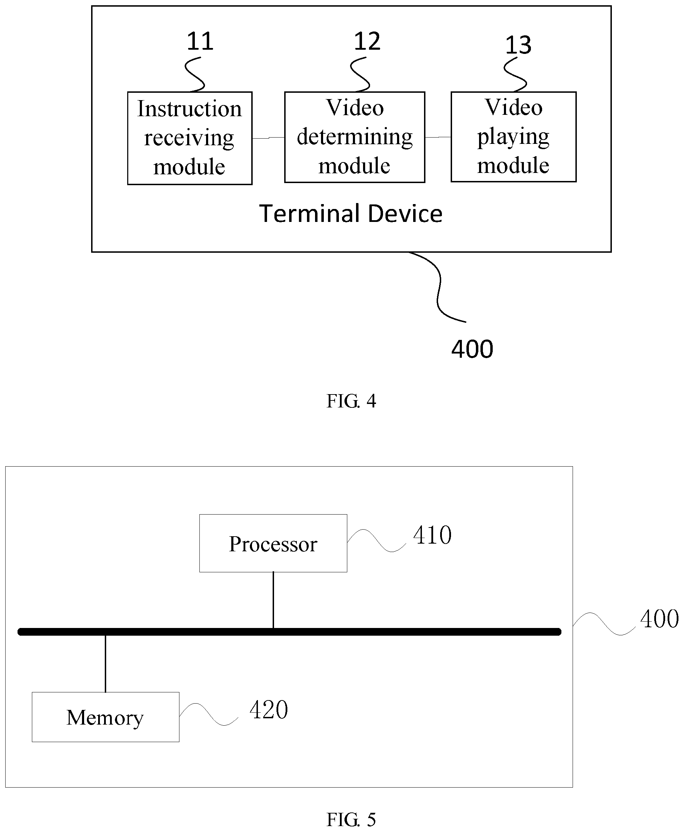

FIG. 4 is a schematic view of functional modules of Embodiment 1 of a terminal device 400 according to the present disclosure. As shown in FIG. 4, the terminal device 400 includes:
an instruction receiving module 11, being configured to receive a video playing instruction sent by the user, the video playing instruction being configured to switch playing of a video that is currently paused by a first terminal of the user to the terminal device;
a video determining module 12, being configured to determine a video source of the video according to an optimal video processing attribute of an online player of the terminal device that is stored under the user's account, and acquire a point in time of the pause playing, which is stored under the user's account, of the video that is currently paused by the first terminal; and
a video playing module 13, being configured to acquire the video from the video source of the video and continue to play the video from the point in time of the pause playing.

Preferably, the video determining module 12 in the aforesaid terminal device 400 is specifically configured to:
search for video sources of the video from an online video library; and
determine a video source that matches the optimal video processing attribute of the online player of the terminal device from among the video sources, which are found through the searching, of the video according to the optimal video processing attribute of the online player of the terminal device 400 that is stored under the user's account.

Preferably, in the aforesaid terminal device 400, the optimal video processing attribute of the online player of the terminal device 400 includes at least one of the following attributes:
a type of a network to which the terminal device 400 is connected, a transmission speed of the network to which the terminal device 400 is connected, a device type of the terminal device 400, a resolution of the online player, and an audio processing capability of the terminal device 400.

Preferably, the instruction receiving module 11 in the aforesaid terminal device 400 is further configured to:
receive information of the account and password that are input by the user in an account & password input interface; and
log on the account of the user.

The terminal device 400 of this embodiment may be configured to execute the technical solutions of the aforesaid method embodiments, and the implementation principle and the technical effect thereof are similar to those of the aforesaid method and thus will not be further described herein.

FIG. 5 is a schematic structural view of hardware of Embodiment 2 of the terminal device 400 according to the present disclosure. As shown in FIG. 5, the terminal 400 includes:
one or more processors 410 and a memory 420, with only one processor 410 being shown in FIG. 5 as an example.

The processor 410 and the memory 420 may be connected to each other via a bus or in other ways, with a connection via the bus being shown in FIG. 5 as an example.

As a non-volatile computer readable storage medium, the memory 420 may be configured to store non-volatile software programs, non-volatile computer executable programs and modules, such as the program instructions/modules corresponding to the method for switching between video playing terminals in the embodiments of the present disclosure (e.g., the instruction receiving module 11, the video determining module 12 and the video playing module 13 of the terminal device 400 shown in FIG. 4). The processor 410 runs the non-volatile software programs, instructions and modules stored in the memory 420 to execute various functions and data processing of the terminal device 400, i.e., to achieve the method for switching between video playing terminals of the aforesaid method embodiments and the functions of the modules of the aforesaid device embodiments.

The memory 420 may include a high-speed random access memory, and may also include a non-volatile storage, e.g., at least one disk memory device, a flash memory device or other non-volatile solid state storages. In some embodiments, the memory 420 may optionally include memories positioned remotely from the processor 410, and these remote memories may be connected to the processor 410 via the network. Examples of the aforesaid network include but are not limited to the Internet, an intranet, a local area network (LAN), a mobile communication network or combinations thereof.

The program instructions/modules are stored in the memory 420 and, when being executed by the one or more processor 410, can execute the method for switching between video playing terminals in any of the aforesaid method embodiments, for example, execute the steps S101 to S103 of the method described above in FIG. 1, the steps S201 and S202 of the method described above in FIG. 2, and the steps S301 and S302 of the method described above in FIG. 3,and can also achieve the functions of the modules 11 to 13 in FIG. 4.

The terminal 400 of the embodiment of the present disclosure may exist in various forms, including but not limited to:
(1) mobile communication devices: this kind of devices is characterized by their mobile communication function, and is mainly used to provide voice and data communication. Such terminals include smartphones (e.g., iPhones), multimedia mobile phones, functional mobile phones, low-end mobile phones and so on.
(2) Supermobile personal computer devices: this kind of devices belongs to the scope of personal computers, and has computing and processing functions and generally has the mobile Internet function. Such terminals include PDA, MID, UMPC devices and so on (e.g., iPad).
(3) portable entertainment devices: this kind of devices can display and play multimedia contents and generally has the mobile Internet function. Such devices include video players, handheld game consoles, smart toys and portable vehicle-mounted navigation devices.
(4) Internet smart TV sets: this kind of devices can play video contents online.
(5) Other electronic devices having the video playing function and the Internet function.

An embodiment of the present disclosure further includes a non-volatile computer storage medium storing computer executable instructions which, when being executed by one or more processors (e.g., the processor 410 in FIG. 5), can enable the one or more processors to execute the method for switching between video playing terminals in any of the aforesaid method embodiments, for example, execute the steps S101 to S103 of the method described above in FIG. 1, the steps S201 and S202 of the method described above in FIG. 2, and the steps S301 and S302 of the method described above in FIG. 3,and can also achieve the functions of the modules 11 to 13 in FIG. 4.

The apparatus or device embodiments described above are only in a schematic nature, where the modules described as separate components may be or may not be physically separate, and the components shown as modules may be or may not be physical units, and may be co-located at a same place or distributed among a plurality of network modules. A part of or all of the modules may be selected depending on the actual need to achieve the objective of the present embodiments.

As can be clearly appreciated by those of ordinary skill in the art from the above description of the embodiments, the embodiments may be implemented by software plus a general hardware platform or, of course, by hardware. As can be understood by those of ordinary skill in the art, all or a part of the process flows described in the aforesaid method embodiments may be implemented by related hardware under the instruction of a computer program, and the program may be stored in a computer readable storage medium and, when being executed, can accomplish the process flows described in the aforesaid method embodiments. Here, the storage medium may be a magnetic disk, an optical disk, a read-only memory (ROM), a random access memory (RAM) or the like.

Finally it shall be noted that, the above embodiments are only used to describe but not to limit the technical solutions of the present disclosure; and within the concept of the present disclosure, technical features of the above embodiments or different embodiments may also be combined with each other, the steps may be implemented in an arbitrary order, and many other variations in different aspects of the present disclosure described above are possible although, for purpose of simplicity, they are not provided in the details. Although the present disclosure has been detailed with reference to the above embodiments, those of ordinary skill in the art shall appreciate that modifications can still be made to the technical solutions disclosed in the above embodiments or equivalent substations may be made to some of the technical features, and the corresponding technical solutions will not depart from the scope of the present disclosure due to such modifications or substations.

## Claims

1. A method for switching between video playing terminals, being **characterized by**, comprising:
receiving, by a second terminal of a user, a video playing instruction sent by the user, the video playing instruction being configured to switch playing of a video that is currently paused by a first terminal of the user to the second terminal;
determining, by the second terminal, a video source of the video according to an optimal video processing attribute of an online player of the second terminal that is stored under the user's account, and acquiring a point in time of the pause playing, which is stored under the user's account, of the video that is currently paused by the first terminal; and
acquiring, by the second terminal, the video from the video source of the video and continuing to play the video from the point in time of the pause playing.

2. The method according to Claim 1, being **characterized in that**, the determining, by the second terminal, a video source of the video according to an optimal video processing attribute of an online player of the second terminal that is stored under the user's account, comprises:
searching, by the second terminal, for video sources of the video from an online video library; and
determining, by the second terminal, a video source that matches the optimal video processing attribute of the online player of the second terminal from among the video sources, which are found through the searching, of the video according to the optimal video processing attribute of the online player of the second terminal stored under the user's account.

3. The method according to Claim 1 or 2, being **characterized in that**, the optimal video processing attribute of the online player of the second terminal comprises at least one of the following attributes:
a type of a network to which the second terminal is connected, a transmission speed of the network to which the second terminal is connected, a device type of the second terminal, a resolution of the online player, and an audio processing capability of the second terminal.

4. The method according to Claim 1 or 2, being **characterized by** further comprising the following steps prior to the step of receiving, by a second terminal of a user, a video playing instruction sent by the user:
receiving, by the online player of the second terminal, information of the account and password that are input by the user in an account & password input interface; and
logging, by the online player of the second terminal, on the account of the user.

5. A terminal device, being **characterized by** the terminal device comprising:
an instruction receiving module, being configured to receive a video playing instruction sent by the user, the video playing instruction being configured to switch playing of a video that is currently paused by a first terminal of the user to the terminal device;
a video determining module, being configured to determine a video source of the video according to an optimal video processing attribute of an online player of the terminal device that is stored under the user's account, and acquire a point in time of the pause playing, which is stored under the user's account, of the video that is currently paused by the first terminal; and
a video playing module, being configured to acquire the video from the video source of the video and continue to play the video from the point in time of the pause playing.

6. The terminal device according to Claim 5, being **characterized in that**, the video determining module is specifically configured to:
search for video sources of the video from an online video library; and
determine a video source that matches the optimal video processing attribute of the online player of the terminal device from among the video sources, which are found through the searching, of the video according to the optimal video processing attribute of the online player of the terminal device that is stored under the user's account.

7. The terminal device according to claim 5 or 6, being **characterized in that**, the optimal video processing attribute of the online player of the terminal device comprises at least one of the following attributes:
a type of a network to which the terminal device is connected, a transmission speed of the network to which the terminal device is connected, a device type of the terminal device, a resolution of the online player, and an audio processing capability of the terminal device.

8. The terminal device according to claim 5 or 6, being **characterized in that**, the instruction receiving module is further configured to:
receive information of the account and password that are input by the user in an account & password input interface; and
log to the account of the user.

9. An electronic device, comprising:
at least one processor; and
a memory communicatively connected with the at least one processor;
wherein the memory stores instructions that can be executed by the at least one processor, the instructions being executed by the at least one processor so that the at least one processor is operative to:
receive a video playing instruction sent by a user, the video playing instruction being configured to switch playing of a video that is currently paused by a first terminal of the user to the electronic device;
determine a video source of the video according to an optimal video processing attribute of an online player of the electronic device that is stored under the user's account, and acquire a point in time of the pause playing, which is stored under the user's account, of the video that is currently paused by the first terminal; and
acquire the video from the video source of the video and continue to play the video from the point in time of the pause playing.

10. A non-volatile computer storage medium storing computer executable instructions that, when being executed by an electronic device, enable the electronic device to:
receive a video playing instruction sent by a user, the video playing instruction being configured to switch playing of a video that is currently paused by a first terminal of the user to the electronic device;
determine a video source of the video according to an optimal video processing attribute of an online player of the electronic device that is stored under the user's account, and acquire a point in time of the pause playing, which is stored under the user's account, of the video that is currently paused by the first terminal; and
acquire the video from the video source of the video and continue to play the video from the point in time of the pause playing.

11. A computer program product, the computer program product comprising a computer program stored in a non-transitory computer readable storage medium, and the computer program comprising program instructions that, when being executed by an electronic device, enable the electronic device to execute the method of any of claim 1 to claim 4.
